# EUROPEAN PATENT SPECIFICATION

(11) **EP 2 873 265 B1**
(45) Date of publication and mention of the grant of the patent: **19.08.2015**
(21) Application number: 13740070.1
(22) Date of filing: 27.06.2013
(51) Int. Cl.: H04W 12/04, H04L 29/06, H04L 12/18, H04W 72/00, H04W 76/00

(54) **METHODS PROVIDING MBMS SERVICE AND TRAFFIC KEY COORDINATION IN A MULTI BMSC DEPLOYMENT AND RELATED BROADCAST PROVISIONING SYSTEMS AND SERVICE CENTERS**
VERFAHREN ZUR BEREITSTELLUNG VON MBMS-DIENSTEN UND VERKEHRSSCHLÜSSELKOORDINATION BEI EINEM MULTI-BMSC-EINSATZ UND ZUGEHÖRIGE RUNDFUNKBEREITSTELLUNGSSYSTEME SOWIE SERVICEZENTREN
PROCÉDÉS DE FOURNITURE DE SERVICE MBMS ET DE COORDINATION DE CLÉ DE TRAFIC DANS UN DÉPLOIEMENT DE MULTIPLE BMSC, ET SYSTÈMES DE PROVISIONNEMENT DE DIFFUSION ET CENTRES DE SERVICE ASSOCIÉS

(30) Priority: 12.07.2012 US 201261670755 P
(43) Date of publication of application: 20.05.2015
(73) Proprietor: Telefonaktiebolaget LM Ericsson (Publ), 164 83 Stockholm (SE)
(72) Inventor: SLSSINGAR, Michael John, S-127 46 Skärholmen (SE); TURCOTTE, Joseph Eric, Montreal, Québec H4P1N6 (CA); LEHTOVIRTA, Vesa, FI-02620 Espoo (FI)
(74) Representative: Brann AB
(86) International application number: PCT/SE2013/050802
(87) International publication number: WO 2014/011099

(56) References cited:
- "3rd Generation Partnership Project; Technical Specification Group Services and System Aspects; 3G Security; Security of Multimedia Broadcast/Multicast Service (MBMS) (Release 10)", 3GPP STANDARD; 3GPP TS 33.246, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 28 December 2010 (2010-12-28) , pages 1-68, XP050462453, [retrieved on 2010-12-28]
- "3rd Generation Partnership Project; Technical Specification Group Services and System Aspects; Multimedia Broadcast/Multicast Service (MBMS); Architecture and functional description (Release 11)", 3GPP STANDARD; 3GPP TS 23.246, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.1.0, 8 March 2012 (2012-03-08), pages 1-66, XP050555338, [retrieved on 2012-03-08]

## Description

### TECHNICAL FIELD

The present disclosure is directed to broadcast services and, more particularly, to multimedia broadcast services.

### BACKGROUND

A Multimedia Broadcast/Multicast Service (MBMS) system is a system that allows delivery of multimedia to mobile stations (also referred to as wireless terminals, user equipment, UEs, etc.) over multicast/broadcast radio channels. The term eMBMS is used in 3GPP (3rd Generation Partnership Project) standards to mean MBMS over Long Term Evolution (LTE) specific radio access networks. In the present disclosure, the term MBMS may also include eMBMS.

The 3GPP specification TS 33.246, "Security of Multimedia Broadcast/Multicast Service (MBMS)," V10.0.0, December 2010, states that the security of MBMS provides different challenges compared to the security of services delivered using point-to-point services. Countering broadcast related threats may require frequent updates of decryption keys in a manner that may not be predicted by subscribers while making efficient use of the radio network. The 3GPP specification TS 33.246, "Security of Multimedia Broadcast/Multicast Service (MBMS)," V10.0.0, December 2010, is incorporated herein in its entirety by reference. According to known MBMS security provisions, it may be difficult to support uninterrupted provision of an MBMS service to a mobile device moving between different radio access networks.

### SUMMARY

It may therefore be an object to address at least some of the above mentioned disadvantages and/or to improve network performance.

According to some embodiments, a method of creating a delivery session for multiple broadcast multicast service centers may include providing a first create delivery session message for a first broadcast multicast service center. A service key identification and a key domain identification may be received from the first broadcast multicast service center, and a second create delivery session message may be provided for a second broadcast multicast service center. The second create delivery session message may include the service key identification and the key domain identification from the first broadcast multicast service center, and the second create delivery session message may include a duplicate indication.

By providing a service key identification and/or a key domain identification from one broadcast multicast service center to another broadcast multicast service center, an same MBMS service may be supported by the different broadcast multicast service centers through different radio access networks in different geographic areas. Accordingly, a wireless terminal may receive uninterrupted access/use to/of the MBMS service while moving between the service through the different radio access networks in the different geographic areas.

Providing the second create delivery session message may include providing the second create delivery session message for the second broadcast multicast service center responsive to receiving the service key identification and the key Domain identification from the first broadcast multicast service center.

The first broadcast multicast service center may be remote from the second broadcast multicast service center. Providing the first create delivery session message may include transmitting the first create delivery session message from a broadcast provisioning system to the first broadcast multicast service center remote from the broadcast provisioning system. Providing the second create delivery session message may include transmitting the second create delivery session message from a broadcast provisioning system to the second broadcast multicast service center remote from the broadcast provisioning system.

A third create delivery session message may be provided for a third broadcast multicast service center. The third create delivery session message may include a duplicate indication, and the third create deliver session message may include the service key identification and the key domain identification from the first broadcast multicast service center. The third broadcast multicast service center may be remote from the first and second broadcast multicast service centers.

The first create delivery session message may include a new service indication, and the second create delivery session message may include a duplicate indication.

The service key identification and the key Domain identification may be received from the second broadcast multicast service center.

The service key identification may be a Multimedia-Broadcast/Multicast-Service (MBMS) service key identification.

A first traffic key identification message may be provided to the first broadcast multicast service center, with the first traffic key identification message including the service key identification, the key domain identification, a traffic key identification, and a refresh time associated with the traffic key identification. A second traffic key identification message may be provided to the second broadcast multicast service center (BMSC2), with the second traffic key identification message including the service key identification, the key domain identification, the traffic key identification, and the refresh time associated with the traffic key identification.

The first create delivery session message may include a delivery session identification and a service identification, with the second create delivery session message including the delivery session identification and the service identification. The first traffic key identification message may include the delivery session identification and the service identification, and the second traffic key identification message may include the delivery session identification and the service identification.

The service key identification may be a first service key identification, the first create delivery session message may include a delivery session identification and a service identification, and the second create delivery session message may include the delivery session identification and the service identification. In addition, a first update delivery session message may be provided for the first broadcast multicast service center, with the first update delivery session message including the delivery session identification and the service identification. The key domain identification and a second service key identification may be received from the first broadcast multicast service center, with the first and second service key identifications being different. A second update delivery session message may be provided for a second broadcast multicast service center, with the second create delivery session message including the second service key identification and the key domain identification from the first broadcast multicast service center.

Receiving the service key identification and the key domain identification may further include receiving the service key identification, the key domain identification, and a service key from the first broadcast multicast service center, and the second create delivery session message may further include the service key from the first broadcast multicast service center.

According to some other embodiments, a broadcast provisioning system may include a provisioning interface providing communications with first and second broadcast multicast service centers, and a processor circuit coupled to the provisioning interface. The processor circuit may be configured to provide a first create delivery session message for the first broadcast multicast service center through the provisioning interface, with the first create delivery session message includes a new service indication. The processor circuit may be further configured to receive a service key identification and a key Domain identification from the first broadcast multicast service center through the provisioning interface. The processor may also be configured to provide a second create delivery session message for the second broadcast multicast service center through the provisioning interface, with the second create delivery session message including the service key identification and the key domain identification from the first broadcast multicast service center.

According to still other embodiments, a method of providing a broadcast service at a broadcast multicast service center may include receiving a create delivery session message from a broadcast provisioning system. Responsive to receiving the create delivery session message, a security service may be created at the broadcast multicast service center including a key domain identification and a service key identification. The service key identification and the key domain identification for the security service may be provided to the broadcast provisioning system.

Receiving the create delivery session message may include receiving the create delivery session message including a new service indication, and creating the security service may include creating the key domain identification and the service key identification at the broadcast multicast service center.

Receiving the create delivery session message may include receiving the create delivery session message including a duplicate indication and including the key domain indication and the service key identification. Creating the security service may include creating the security service using the key domain identification and the service key identification received from the broadcast provisioning system.

A traffic key identification message may be received from the broadcast provisioning system, with the traffic key identification message including the service key identification, the key domain identification, a traffic key identification, and a refresh time associated with the traffic key identification.

The create delivery session message may include a delivery session identification and a service identification, and the traffic key identification message may include the delivery session identification and the service identification.

A traffic key may be generated at the broadcast multicast service center using the service key identification, the key domain identification, and the traffic key identification.

The traffic key may include a Multimedia-Broadcast/Multicast-Service (MBMS) traffic key, with the service key identification including an MBMS service key identification, and with the traffic key identification including an MBMS traffic key identification.

Creating may further include creating a service key identified by the key domain identification and the service key identification. In addition, the service key may be transmitted to a user equipment node, the traffic key may be transmitted to the user equipment node protected with the service key, and multimedia content data may be transmitted to the user equipment node protected with the traffic key.

The service key identification may be a first service key identification, and the create delivery session message may include a delivery session identification and a service identification. In addition, an update delivery session message may be received from the broadcast provisioning system, with the first update delivery session message including the delivery session identification and the service identification. Responsive to receiving the update delivery session message, the security service may be received at the broadcast multicast service center to use the key domain identification and a second service key identification, with the first and second service key identifications being different. The key domain identification and the second service key identification for the security service may be provided to the broadcast provisioning system.

Creating the security service may include creating security service including the service key identification, the key domain identification, and a service key, and wherein providing the service key identification and the key domain identification further comprises providing the service key identification, the key domain identification, and the service key to the broadcast provisioning system.

According to yet other embodiments, a broadcast multicast service center may include a provisioning interface providing communications with a broadcast provisioning system, and a processor circuit coupled to the provisioning interface. The processor circuit may be configured to receive a create delivery session message from the broadcast provisioning system through the provisioning interface, to create a security service including a key domain identification and a service key identification responsive to receiving the create delivery session message, and to provide the service key identification and the key domain identification for the security service through the provisioning interface to the broadcast provisioning system.

### BRIEF DESCRIPTION OF THE DRAWINGS

The accompanying drawings, which are included to provide a further understanding of the disclosure and are incorporated in and constitute a part of this application, illustrate certain non-limiting embodiment(s) of inventive concepts disclosed herein. In the drawings:
Figure 1 is a block diagram illustrating MBMS broadcast systems;
Figure 2 is a block diagram illustrating MBMS broadcast systems according to some embodiments of present inventive concepts;
Figure 3 is a block diagram illustrating centralized provisioning control for a plurality of BSMCs according to some embodiments of present inventive concepts;
Figure 4 is a block diagram illustrating centralized provisioning control co-located with a BSMC according to some embodiments of present inventive concepts;
Figure 5 is a flow diagram illustrating MSK service key handling flows/operations according to some embodiments of present inventive concepts;
Figure 6 is a flow diagram illustrating MTK traffic key handling flows/operations according to some embodiments of present inventive concepts;
Figure 7 is a block diagram of a communication system that is configured according to some embodiments;
Figure 8 is a block diagram illustrating a base station and a wireless terminal according to some embodiments of inventive concepts;
Figure 9 is a block diagram illustrating broadcast provisioning systems and broadcast multicast service centers according to some embodiments of inventive concepts;
Figure 10 is a flow diagram illustrating MSK service key update handling flows/operations according to some embodiments of inventive concepts; and
Figure 11 is a flow diagram illustrating broadcast multicast service center operations according to some embodiments of inventive concepts.

### DETAILED DESCRIPTION

Present inventive concepts will now be described more fully hereinafter with reference to the accompanying drawings, in which examples of embodiments of inventive concepts are shown. Present inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

For purposes of illustration and explanation only, these and other embodiments of present inventive concepts are described herein in the context of operating in/with a Radio Access Network (also referred to as a Radio Network or RAN) that communicates over radio communication channels with wireless terminals (also referred to, for example, as User Equipment nodes, User Equipment, UEs, etc.). It will be understood, however, that present inventive concepts are not limited to such embodiments and may be embodied generally in any type of communication network. As used herein, a wireless terminal (also referred to as a user equipment node, user equipment, UE, etc.) can include any device that receives data from a communication network, and may include, but is not limited to, a mobile telephone ("cellular" telephone), laptop/portable computer, pocket computer, hand-held computer, and/or desktop computer.

In some embodiments of a RAN, several base stations can be connected (e.g., by landlines or radio channels) to a radio network controller (RNC). The radio network controller, also sometimes termed a base station controller (BSC), supervises and coordinates various activities of the plural base stations connected thereto. The radio network controller is typically connected to one or more core networks.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) technology. UTRAN, short for UMTS Terrestrial Radio Access Network, is a collective term for the Node B's and Radio Network Controllers which make up the UMTS radio access network. Thus, UTRAN is essentially a radio access network using wideband code division multiple access for UEs.

The Third Generation Partnership Project (3GPP) has undertaken to further evolve the UTRAN and GSM based radio access network technologies. In this regard, specifications for the Evolved Universal Terrestrial Radio Access Network (E-UTRAN) are ongoing within 3GPP. The Evolved Universal Terrestrial Radio Access Network (E-UTRAN) comprises the Long Term Evolution (LTE) and System Architecture Evolution (SAE).

Note that although terminology from 3GPP (3rd Generation Partnership Project) LTE (Long Term Evolution) is used in this disclosure to exemplify embodiments of inventive concepts, this should not be seen as limiting the scope of inventive concepts to only these systems. Other wireless systems, including WCDMA (Wideband Code Division Multiple Access), WiMax (Worldwide Interoperability for Microwave Access), UMB (Ultra Mobile Broadband), HSDPA (High-Speed Downlink Packet Access), GSM (Global System for Mobile Communications), etc., may also benefit from exploiting embodiments of present inventive concepts disclosed herein.

Also note that terminology such as base station (also referred to as eNodeB or Evolved Node B) and wireless terminal (also referred to as UE or User Equipment) should be considered non-limiting and does not imply a certain hierarchical relation between the two. In general a base station (e.g., an "eNodeB") and a wireless terminal (e.g., a "UE") may be considered as examples of respective different communications devices that communicate with each other over a wireless radio channel. While embodiments discussed herein may focus on wireless transmissions in a downlink from an eNodeB to a UE, embodiments of inventive concepts may also be applied, for example, in the uplink.

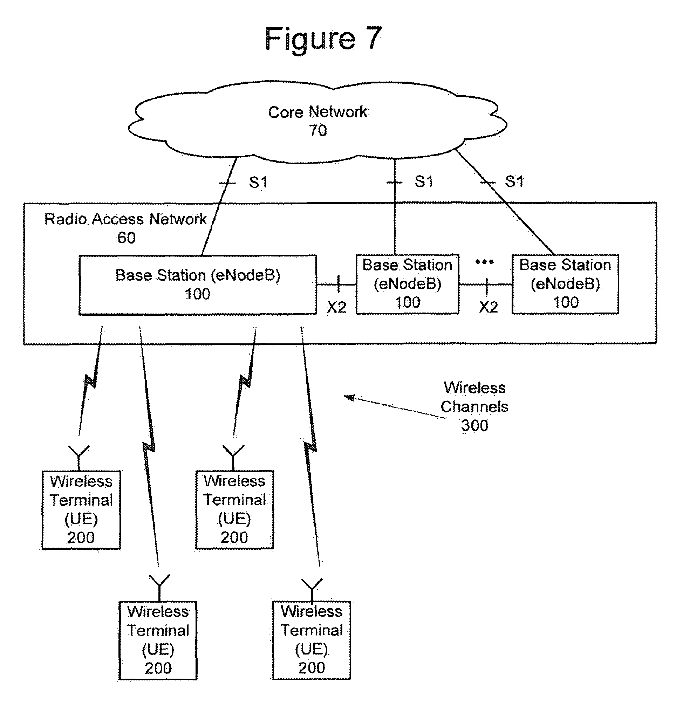

Figure 7 is a block diagram of a communication system that is configured to operate according to some embodiments of present inventive concepts. An example RAN 60 is shown that may be a Long Term Evolution (LTE) RAN. Radio base stations (e.g., eNodeBs) 100 may be connected directly to one or more core networks 70, and/or radio base stations 100 may be coupled to core networks 70 through one or more radio network controllers (RNC). In some embodiments, functionality of a radio network controller(s) may be performed by radio base stations 100. Radio base stations 100 communicate over wireless channels 300 with wireless terminals (also referred to as user equipment nodes or UEs) 200 that are within their respective communication service cells (also referred to as coverage areas). The radio base stations 100 can communicate with one another through an X2 interface and with the core network(s) 70 through S1 interfaces, as is well known to one who is skilled in the art.

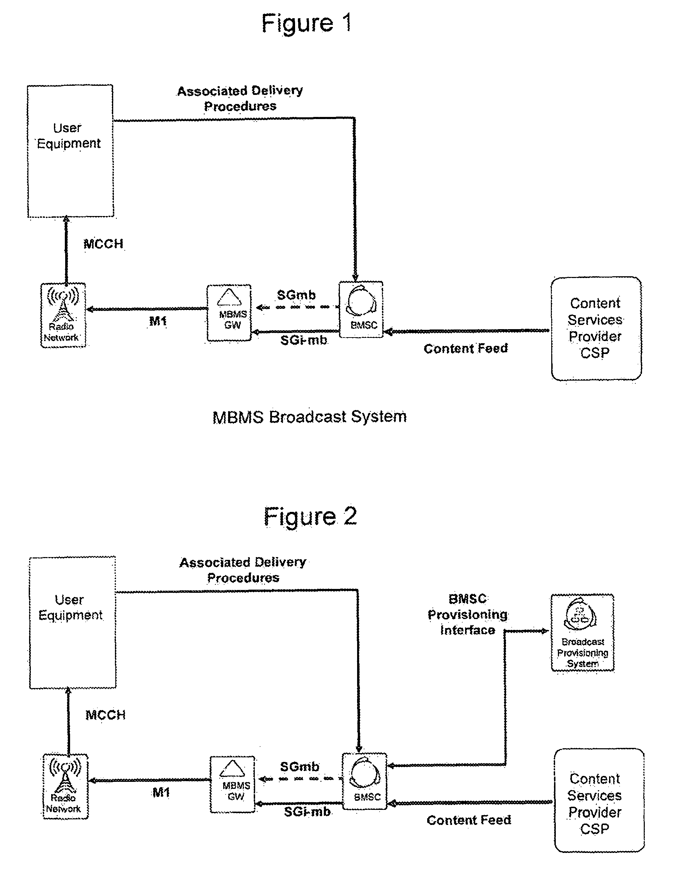

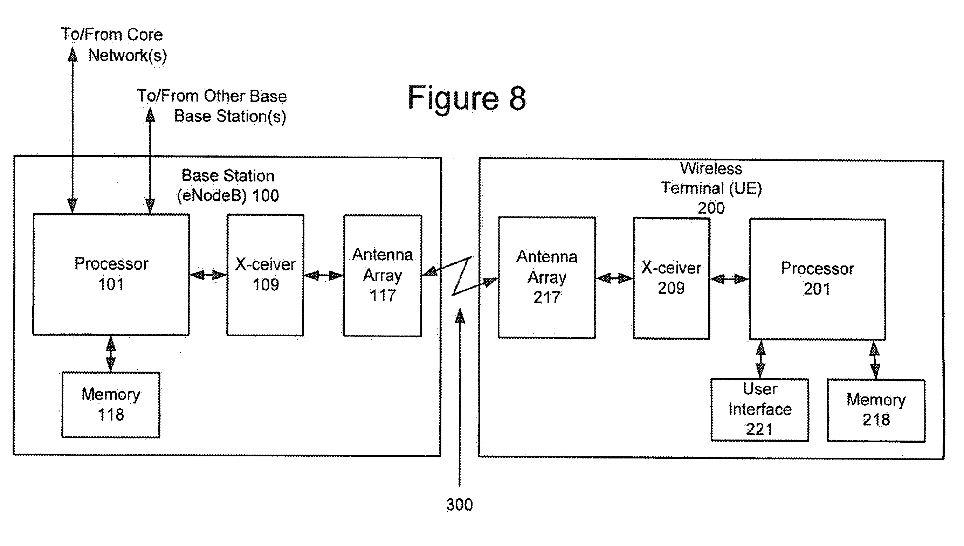

Figure 8 is a block diagram of a base station 100 and a wireless terminal 200 of Figure 1 in communication over wireless channel 300 according to some embodiments of present inventive concepts. As shown, base station 100 may include transceiver 109 coupled between processor 101 and antenna array 117 (including multiple antennas), and memory 118 coupled to processor 101. Moreover, wireless terminal 200 may include transceiver 209 coupled between antenna array 217 and processor 201, and user interface 221 and memory 218 may be coupled to processor 201. Accordingly, base station processor 101 may transmit communications through transceiver 109 and antenna array 117 for reception at wireless terminal processor 201 through antenna array 217 and transceiver 209. In the other direction, wireless terminal processor 201 may transmit communications through transceiver 209 and antenna array 217 for reception at base station processor 101 through antenna array 117 and transceiver 109. To support multi-branch MIMO (allowing parallel transmission of multiple layers/streams of data using a same time frequency resource element or TFRE), each of antenna arrays 117 and 217 may include multiple antenna elements. Wireless terminal 200 of Figure 2, for example, may be a cellular radiotelephone, a smart phone, a laptop/netbook/tablet/handheld computer, or any other device providing wireless communications. User interface 211, for example, may include a visual display such as an liquid crystal display, a touch sensitive visual display, a keypad, a speaker, a microphone, etc.

Figure 1 is a block diagram illustrating an arrangement of an MBMS (Multimedia Broadcast/Multicast Service) broadcast system. In Figure 1: the Radio Network may be implemented as RAN 60 of Figures 7 and/or 8; the User Equipment may be implemented as a wireless terminal (UE) 200 of Figures 7 and/or 8; MBMS GW may be implemented as an element of RAN 60 and/or core network 70 or separately from either; BMSC may be implemented as an element of RAN 60 and/or core network 70 or separately from either; and content services provider CSP may be coupled to BMSC through core network 70 and/or through another network (such as the Internet).

MBMS introduces the concept of point-to-multipoint service into a 3GPP broadcast and multicast system. An element of an MBMS User Service is to be able to securely transmit data to a given set of users. To achieve this, methods of authentication, key distribution, and data protection may be provided for a MBMS User Service, as specified in 3GPP specifications. In particular, 3GPP MBMS currently specifies that to protect an MBMS User Service, service and transport keys are delivered from the Broadcast Multicast Service Center (BMSC, also referred to as BM-SC) to the UE.

The BMSC controls the use of the MBMS Service Keys (MSKs) to secure the different transport sessions. The MSKs are used to protect delivery of MBMS Transport Keys (MTKs), which are used to secure the transport session content and delivered in-band using the content transport.

MBMS systems of Figure 1, however, may not take into account multiple BMSC deployments where a same MBMS user service is to be protected, but where the user equipment is mobile and the same user service can be served from more than one BMSC (meaning there are in fact several co-operating BMSCs). In such cases, the MSK service key and MTK traffic key may need to be correctly coordinated to allow all cooperating BMSCs to use the same MBMS Service Key (MSK) and MBMS Traffic Key (MTK) in such a way that a mobile/wireless terminal UE (i.e., a mobile UE that is physically moving) can decrypt content regardless of which BMSC it is in communication with.

To illustrate this point, the MBMS of Figure 1 may not take into account cases covering regional content. For example, a same MBMS user service may be specified and announced nationwide, but a number of files or content broadcast in region 1 from BMSC #1 may be different than a number of files broadcast in region 2 from BMSC #2. In such a case, the MTK traffic keys may reach different MTK-ID values in the two BMSC s, and according to the MBMS of Figure 1, the user equipment UE may not be able to de-encrypt the content, for example, if due to mobility, the UE begins receiving in region 1 and then moves to region 2.

According to some embodiments of present inventive concepts, a BMSC Provisioning Interface and a Broadcast Provisioning System may be provided as shown in Figure 2. In Figure 2: the Radio Network may be implemented as RAN 60 of Figures 7 and/or 8; the User Equipment may be implemented as a wireless terminal (UE) 200 of Figures 7 and/or 8; MBMS GW may be implemented as an element of RAN 60 and/or core network 70 or separately from either; BMSC may be implemented as an element of RAN 60 and/or core network 70 or separately from either; and content services provider CSP may be coupled to BMSC through core network 70 and/or through another network (such as the Internet).

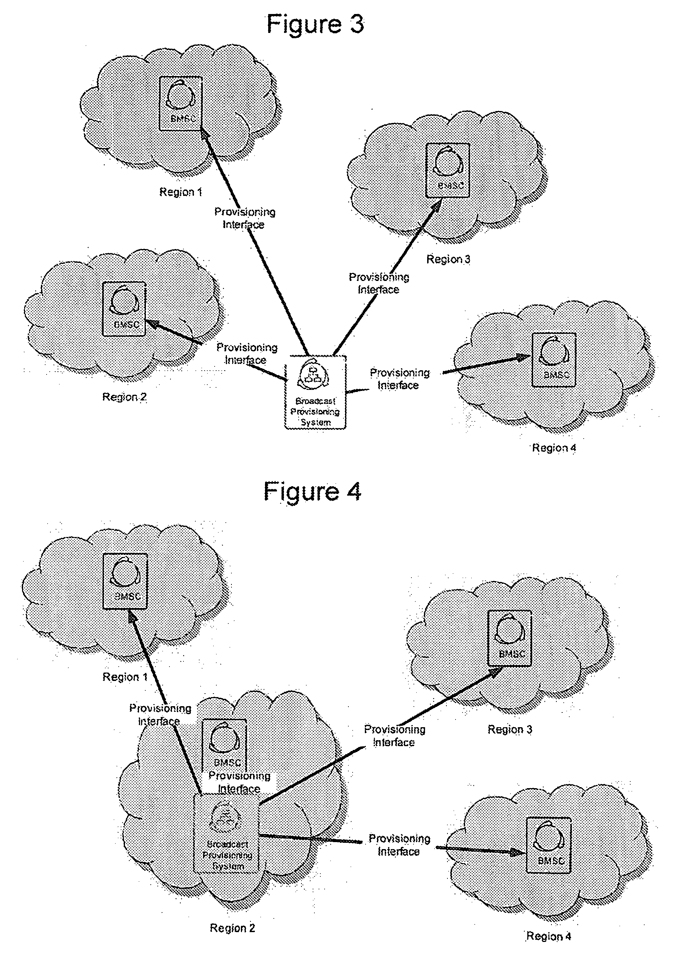

As shown in Figures 3 and 4, the Broadcast Provisioning System (BPS) may be considered part of BMSC functionality but can be deployed in such a way that it is either co-located with a BMSC or as an external distributed node. A deployment arrangement for centralized provisioning control is shown in Figure 3, and an arrangement for BMSC co-located provisioning control is illustrated in Figure 4. In both cases, the use case being assumed involves multiple BMSCs that may co-operate to deliver a same MBMS user service to several different regions. In embodiments of Figure 4 where BPS functionality is provided at a BMSC, the BMSC including the BPS functionality may be considered a master provisioning BMSC.

MSK Handling In Multi- BMSC Deployment.

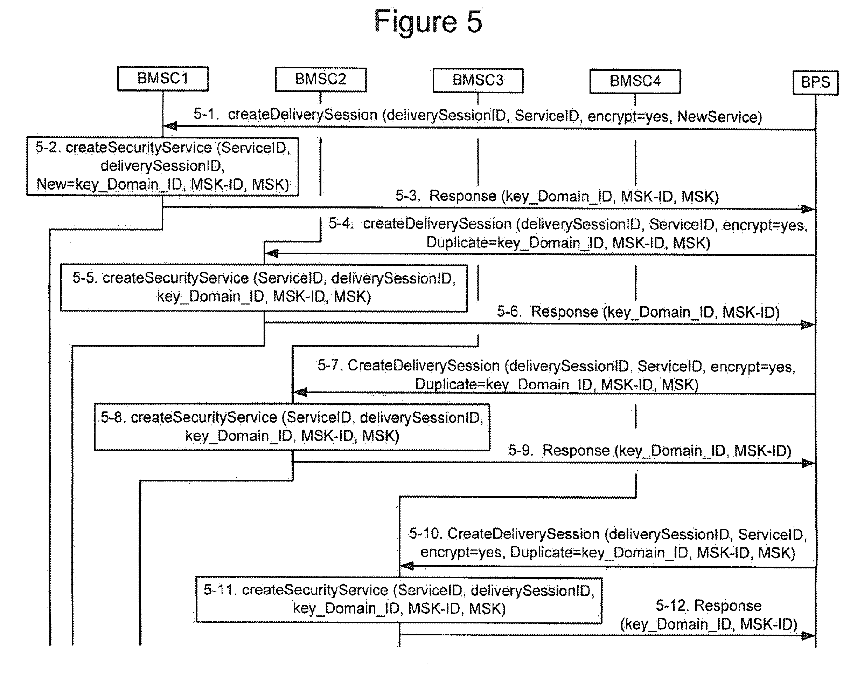

As shown in Figure 5, the Broadcast Provisioning System (BPS) may use a create delivery session (createDeliverySession) message to arbitrarily select a single BMSC (e.g., BMSC1) to be a master reference to create/provide an MBMS service key (MSK), a key domain identification (key_Domain_ID), and a service key identification (MSK-ID), (see, Figure 5, Operation 5-1: createDeliverySession). At operation/flow 5-1, BPS may transmit the create delivery session message to the selected BMSC (e.g., BMSC1) with the create delivery message including a delivery session identification (deliverySessionID), a service identification (serviceID), an encryption designation (yes), and a new service indication (NewService). The choice of which BMSC may be arbitrary since each BMSC may be capable of fulfilling the requirements cited in 3GPP specifications concerning MSK Identification. Responsive to receiving the create delivery session message of operation/flow 5-1, the receiving BMSC (e.g., BMSC1) creates the security service at operation/flow 5-2 with the security service including the service identification and delivery session identification provided by the BPS and including a new service key (MSK) identified by a new key domain identification (key_Domain_ID) and a new service key identification (MSK-ID). More particularly, the new service key identification (MSK-ID) may include a key group (key_group) portion xx and a key number (key_number) portion zz1. According to some embodiments, the key group portion of the service key ID may remain the same while the key number portion is updated.

An MBMS service key (MSK) is uniquely identifiable by its key domain identification and MBMS service key identification (MSK-ID). The key domain identification may be 3 bytes long and may include a mobile country code (MCC) and a mobile network code (MNC). The MSK-ID may be 4 bytes long with byte 0 and byte 1 containing the key group part, and byte 2 and byte 3 containing the key number part. The key number part is used to distinguish MSKs that have the same key domain ID and key group part. The key group part is used to group keys together to allow redundant MSKs to be deleted.

An MBMS traffic key (MTK) is uniquely identifiable by its key domain identification, MSK-ID, and MTK-ID. The MTK-ID may be a 2 byte long sequence number that is used to distinguish MTKs that have the same key domain ID and MSK-ID. An MTK-ID that will be used in a next MTK update may need to be greater than the previously used MTK-ID.

The service identification (serviceID) element identifies the service uniquely. The session identification (sessionID) attribute identifies the delivery session. The encryption designation indicates whether (or not) the service identified by the serviceID and the delivery session within the service identified by the delivery session ID is to be protected with encryption.

The service key MSK identified by Key Domain ID (key_Domain_ID) and MSK ID (MSK-ID) is created by the selected BMSC (see, Figure 5, Operation 5-2: createSecurityService) and returned/transmitted with the key domain identification and service key identification to the Broadcast Provisioning System in a response message (see, Figure 5, Operation 5-3: Response(key_Domain_ID, MSK-ID, MSK)) from where the security service information may be propagated/transmitted to other cooperating BMSCs (see, Figure 5, Operations 5-4 to 5-12).

In each of operations 5-4, 5-7, and 5-10 of Figure 5, the Broadcast Provisioning System (BPS) may propagate/transmit the MSK identified by the Key Domain ID and MSK-ID to respective BMSCs (i.e., BMSC2, BMSC3, and BMSC4) using respective createDeliverySession messages (with each of these later create delivery session messages including the delivery session identification, the service identification, the encryption indication, a duplicate service indication, and the service key MSK, service key identification MSK-ID, and key domain identification created by BMSC1). In each of operations 5-5, 5-8, and 5-11, respective BMSCs (i.e., BMSC2, BMSC3, and BMSC4) may create the security service using the provided service identification, delivery session identification, service key MSK, key domain identification, and MSK service key identification received from the provisioning system.

The new service indication indicates that the receiving BMSC (e.g., BMSC1) should create a new security service including a new service key MSK, a new service key identification MSK-ID, and a new key domain identification. A duplicate service indication indicates that the receiving BMSC (e.g., BMSC2, BMSC3, and BMSC4) should create a security service using the service key, the service key identification, and the key domain identification provided in the create delivery message.

In each of operations 5-6, 5-9, and 5-12 of Figure 5, the respective BMSCs (i.e., BMSC2, BMSC3, and BMSC4) may respond with the key_Domain_ID and the MSK-ID to confirm creation of the service key MSK. In this way all BMSCs may be provisioned with the same service key MSK, service key identification MSK-ID (including key group and key number portions), and key domain identification. As shown, the secondary BMSCs (e.g., BMSC2, BMSC3, and BMSC4) may respond (at operations 5-6, 5-9, and 5-12) without transmitting the service key MSK because the MSK is known to the provisioning system BPS and the key domain identification and MSK-ID are sufficient to indicate creation of the security service. According to some other embodiments, responses of primary BMSC (BMSC1) and secondary BMSCs (BMSC2, BMSC3, and BMSC4) may all provide responses (at operations 5-3, 5-6, 5-9, and 5-12) including the key domain identification, the MSK identification, and the MSK service key. According to still other embodiments, the secondary BMSCs may respond (at operations 5-6, 5-9, and 5-12) without transmitting the key domain identification and/or the service key identification because this information is known by the provisioning system BPS, and the response messages (without the key domain identification and/or service key identification) may be sufficient to indicate creation of the security service without this information.

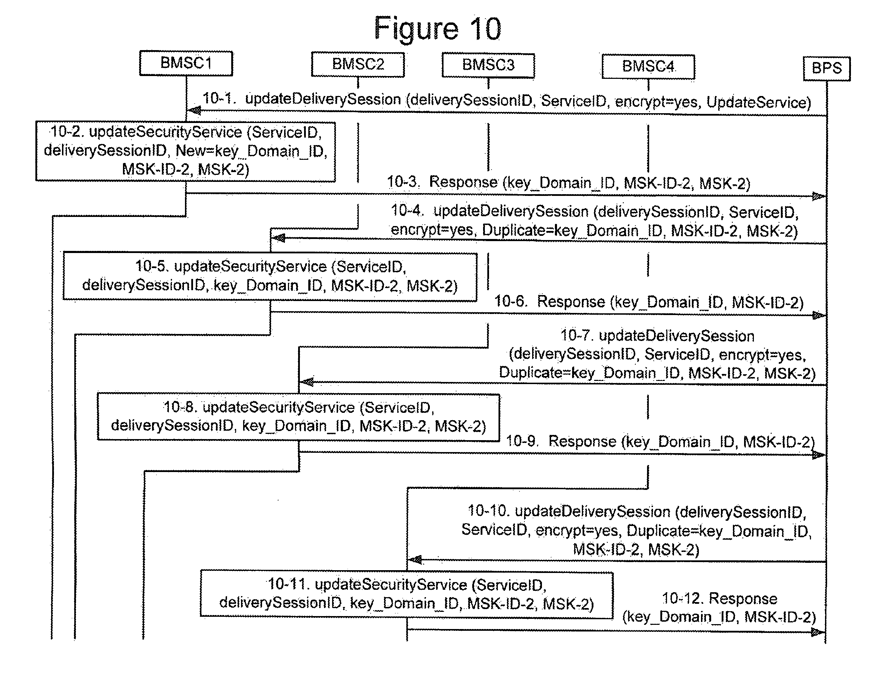

According to some embodiments, all BMSCs (e.g., BMSC1, BMSC2, BMSC3, and BMSC4) may use the same method to create their security service and MSK given the Key Domain ID and MSK ID. According to some embodiments, the primary BMSC (e.g., BMSC1) may create the security service including the service key MSK, service key identification MSK-ID, and key domain identification, and the secondary BMSCs (e.g., BMSC2, BMSC3, and BMSC4) may create the same security service using the service key MSK, the Key Domain ID, and the MSK ID created/provided by the primary BMSC. Similar operations may be performed to update the service key and service key identification for the MBMS service. As shown in Figure 10, the Broadcast Provisioning System (BPS) may use an update delivery session (updateDeliverySession) message to arbitrarily select a single BMSC (e.g., BMSC1) to be a master reference to create/provide an updated MBMS service key (MSK) and an updated service key identification (MSK-ID) for the previously created service discussed above with respect to Figure 5, (see, Figure 10, Operation 10-1: updateDeliverySession). At operation/flow 10-1, BPS may transmit the update delivery session message to the selected BMSC (e.g., BMSC1) with the update delivery message including the delivery session identification (deliverySessionID), the service identification (serviceID), the encryption designation (yes), and an updateservice indication (UpdateService). Elements (e.g., deliverySessionID, ServiceID, encryption indication) of the initial update delivery session message of operation 10-1 may be the same as corresponding elements of the respective createDeliverySession message of operation 5-1 of the same MBMS service.

As shown in Figure 10, the same BMSC (e.g., BMSC1) that was selected to create the security service at operation 5-1 may also be used to update the service key for the service at operation 10-1. The choice of which BMSC is used to update the security service, however, may be arbitrary since each BMSC may be capable of fulfilling the requirements cited in 3GPP specifications concerning MSK Identification. Responsive to receiving the update delivery session message of operation/flow 10-1, the receiving BMSC (e.g., BMSC1) updates/creates the security service at operation/flow 10-2 with the updated security service including the original service identification and the original delivery session identification provided by the BPS for the MBMS service and including an updated service key (MSK-2) identified by the original key domain identification (key_Domain_ID) for the MBMS service and an updated service key identification (MSK-ID-2). More particularly, the updated service key identification (MSK-ID-2) may include the original key group (key_group) xx (as discussed above with respect to Figure 5) and an updated key number (key_number) portion zz2 (that is different than the key_number portion zz1 of the original MSK-ID).

The updated service key MSK-2 for the security service is identified by the original key domain ID (key_Domain_ID) that is reused from the initial creation of the security service (at operation 5-1) and the updated MSK ID (MSK-ID-2) that is updated/created by the selected BMSC (see, Figure 10, Operation 10-2: updateSecurityService). The updated service key MSK-2 is returned/transmitted with the original key domain identification and the updated service key identification MSK-ID-2 to the Broadcast Provisioning System BPS in a response message (see, Figure 10, Operation 10-3: Response(key_Domain_ID, MSK-ID, MSK)) from where the updated security service information may be propagated/transmitted to other cooperating BMSCs (see, Figure 10, Operations 10-4 to 10-12).

In each of operations 10-4, 10-7, and 10-10 of Figure 10, the Broadcast Provisioning System (BPS) may propagate/transmit the updated MSK-2 identified by the original Key Domain ID and the updated MSK-ID-2 to respective BMSCs (i.e., BMSC 2, BMSC 3, and BMSC 4) using respective updateDeliverySession messages (with each of these later update delivery session messages including the delivery session identification, the service identification, the encryption indication, a duplicate service indication, and the update service key MSK-2, the updated service key identification MSK-ID-2, and the original key domain identification). In each of operations 10-5, 10-8, and 10-11, respective BMSCs (i.e., BMSC2, BMSC3, and BMSC4) may update the security service using the provided service identification, delivery session identification, updated service key MSK-2, original key domain identification, and updated MSK service key identification MSK-ID-2 received from the broadcast provisioning system BPS.

In each of operations 10-6, 10-9, and 10-12 of Figure 10, the respective BMSCs (i.e., BMSC2, BMSC3, and BMSC4) may respond with the original key_Domain_ID and the updated MSK identification MSK-ID-2 to confirm the update of the service key MSK-2. In this way all BMSCs may be provisioned with the same updated service key MSK-2, the same updated service key identification MSK-ID-2 (including the original key group portion and the updated key number portion), and the original key domain identification. As shown, the secondary BMSCs (e.g., BMSC2, BMSC3, and BMSC4) may respond (at operations 10-6, 10-9, and 10-12) without transmitting the updated service key MSK-2 because the updated service key MSK-2 is known to the provisioning system BPS and the key domain identification and the updated MSK identification MSK-ID-2 are sufficient to indicate updating of the security service. According to some other embodiments, responses of primary BMSC (BMSC1) and secondary BMSCs (BMSC2, BMSC3, and BMSC4) may all provide responses (at operations 10-3, 10-6, 10-9, and 10-12) including the original key domain identification, the updated MSK identification MSK-ID-2, and the updated service key MSK-2. According to still other embodiments, the secondary BMSCs may respond (at operations 10-6, 10-9, and 10-12) without transmitting the key domain identification and/or the service key identification because this information is already known by the provisioning system BPS, and successful reception of the response messages (without the key domain identification and/or service key identification) may be sufficient to indicate update of the security service without this information.

According to some embodiments, all BMSCs (e.g., BMSC1, BMSC2, BMSC3, and BMSC4) may use the same method to update their security service and service key MSK-2 given the original Key Domain ID and the updated service key identification MSK-ID-2. According to some embodiments, the primary BMSC (e.g., BMSC1) may update the security service including the updated service key MSK-2, the updated service key identification MSK-ID-2, and the original key domain identification, and the secondary BMSCs (e.g., BMSC2, BMSC3, and BMSC4) may create the same security service using the updated service key MSK-2, the original Key Domain ID, and the updated service key identification MSK-ID-2 created/provided by the primary BMSC.

MTK Handling.

3GPP standards state that every traffic key (e.g., every MBMS traffic key MTK) may be uniquely identifiable by its Key Domain ID (key_Domain_ID), MSK ID (MSK-ID), and MTK ID (MTK-ID). By the mechanism outlined above with respect to Figure 5, each BMSC may thus have the MSK and Key Domain ID parts it requires to create the MTK. The MTK-ID and associated refresh time (also referred to as validity time information and/or key synchronization information), however, may need to be provided by a second mechanism.

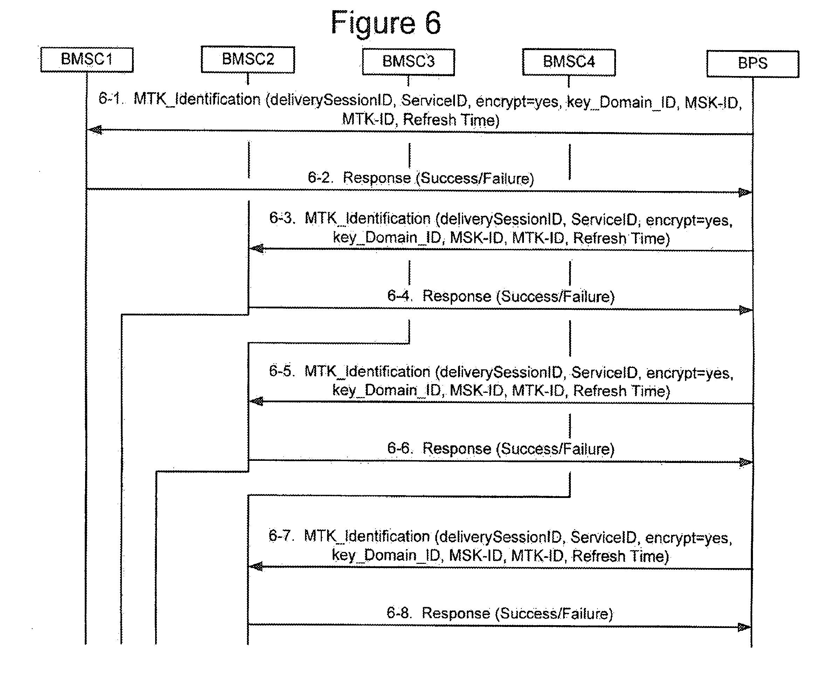

This second mechanism may be realized by the Broadcast Provisioning System using the Provisioning Interface to specify a MTK-ID and refresh time (also referred to as validity time information and/or key synchronization information, see, Figure 6, operations 6-1, 6-3, 6-5, and 6-7). Each of operations 6-1, 6-3, 6-5, and 6-7 of Figure 6 may thus provide the same information from the BPS to respective BMSC1, BMSC2 , BMSC3 , and BMSC4.

Each BMSCs may thus be responsible to create its own MTK-ID (traffic key identification) and hence its own MTK (traffic key).

According to some embodiments, all BMSCs may use a same method to create their MTK given the Key Domain ID and MSK ID and MTK ID.

Some embodiments of present inventive concepts may also allow a MTK refresh time interval to be specified. This information may allow all BMSCs which are UTC (Universal Time Coordinated) time synchronized to compute when to update their MTKs (traffic keys).

Measures according to some embodiments of present inventive concepts may enable the MBMS security handling for multiple BMSC deployments when using 3GPP MBMS security.

Some embodiments of present inventive concepts may provide a central coordination of MSK (service key) and MTK (traffic key) which may be useful for practical multi- BMSC MBMS security enabled services.

As shown in Figure 6, the broadcast provisioning system BPS may transmit traffic key identification messages (MTK_Identification) including the same information to each of the BMSCs (e.g., BMSC1, BMSC2, BMSC3, and BMSC4) at operations 6-1, 6-3, 6-5, and 6-7 allowing each BMSC to create the same traffic key for the same service. For example, the traffic key identification messages for the MBMS service may include the delivery session identification (deliverySessionID), service identification (ServiceID), encryption indication ("yes"), key domain identification (key_Domain_ID), service key identification (MSK-ID), traffic key identification (MTK-ID), and refresh time, and each BMSC may generate/create the same traffic key (MTK) using the information provided. According to some other embodiments, the broadcast provisioning system BPS may generate/create the traffic key (MTK), and the traffic key (MTK) may be transmitted in the MTK identification messages with the delivery session identification, the service identification, the encryption indication, the key domain identification, and service key identification, the traffic key identification, and the refresh time.

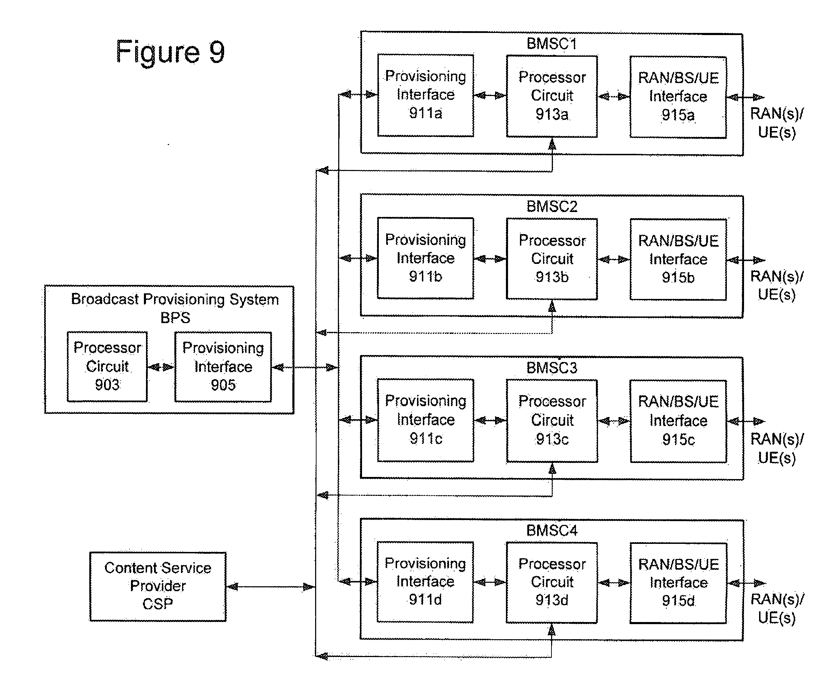

Figure 9 is a block diagram illustrating elements of broadcast provisioning system BPS and broadcast multicast service centers BMSC1, BMSC2, BMSC3, and BMSC4 according to some embodiments of inventive concepts. As shown, broadcast provisioning system BPS may include a processor circuit 903 and a provisioning interface 905 providing a communications coupling with each of the BMSCs. Each BMSC may include a provisioning interface 911 providing a communications coupling with broadcast provisioning system BPS, a processor circuit 913, and a RAN/BS/UE interface 915 providing a communications coupling with/to a respective radio access network(s) (RAN), a base station(s) BS, and/or wireless terminal(s) UE. As discussed in greater detail below, operations of Figures 5, 6, and 10 may thus be performed by elements of broadcast provisioning system BPS and/or BMSCs to support delivery of a same MBMS service to mobile terminals UEs communicating through different radio access networks in different geographic regions.

The broadcast provisioning system BPS may thus include provisioning interface 905 providing communications with a plurality of broadcast multicast service centers (e.g., BMSC1, BMSC2, BMSC3, and BMSC4), and processor circuit 903 coupled to the provisioning interface 905. The processor circuit 903 may be configured to provide (e.g., transmit) a first create delivery session message for a first broadcast multicast service center BMSC1 (also referred to as a primary BSMC) through the provisioning interface 905 at operation 5-1, with the first create delivery session message including a new service indication. More particularly, the first create delivery session message may include a delivery session identification (deliverySessionID), a service identification (ServiceID), an encryption indication (encrypt=yes), and the new service indication (NewService).

As discussed above, BMSC1 may create the security service including the key domain identification key_Domain_ID, the service key identification MSK-ID (e.g., a MBMS service key identification), and the service key MSK at operation 5-2, and transmit the response including the key domain identification, the service key identification MSK-ID, and the service key MSK at operation 5-3. Accordingly, processor circuit 903 may receive the service key identification and the key Domain identification from the first broadcast multicast service center BMSC1 through the provisioning interface (905 at operation 5-3. Upon receipt of the response through provisioning interface 905 at operation 503, processor circuit 903 may propagate the security service information to one or more other BMSCs supporting the same MBMS. For example, processor circuit 903 may provide (e.g., transmit) a second create delivery session message for the second broadcast multicast service center BMSC2 (also referred to as a secondary BMSC) through the provisioning interface 905 at operation 5-4, with the second create delivery session message including a duplicate indication. More particularly, the second create delivery session message may include the delivery session identification (deliverySessionID), the service identification (ServiceID), the encryption indication (encrypt=yes), duplicate service indication (duplicate), the key domain identification, the service key identification, and the service key. The second create delivery session message that is transmitted to BMSC2 may thus include the key domain identification, the service key identification MSK, and the service key MSK that were generated/created by BMSC1.

The same service key MSK, the same service key identification MSK-ID, and key domain identification may thus be used at a primary BMSC (e.g., BMSC1) that initially created the security service, and at a plurality of secondary BMSCs (e.g., BMSC2, BMSC3, and BMSC4) using the same security service for the same MBMS service. For example, processor circuit 903 may provide (e.g., transmit) third and fourth create delivery session messages for the third and fourth broadcast multicast service centers BMSC3 and BMSC4 through the provisioning interface 905 at operations 5-7 and 5-10, with the third and fourth create delivery session messages including the duplicate indication. The third and fourth create delivery session messages may thus include the same information as the second create delivery session message.

The broadcast provisioning system BPS may thus coordinate use of the same service key, the same service key identification, and the same key domain identification for the same MBMS service that is provided from different BMSCs coupled to respective different radio access networks in different geographic locations. According to some embodiments, each of the broadcast multicast service centers of Figure 9 may be remote from the other broadcast multicast service centers, and each of the broadcast multicast service centers may be remote from the broadcast provisioning system as discussed above with respect to Figure 3. According to some other embodiments, each of the broadcast multicast service centers of Figure 9 may be remote from the other broadcast multicast service centers, but the broadcast provisioning system may be co-located with one of the broadcast multicast service centers as discussed above with respect to Figure 4.

As discussed above, each of the BMSCs may create a security service (e.g., at operations 5-2, 5-5, 5-8, and 5-11) using a same key domain identification, a same service key identification, and a same service key to support provision of a same MBMS service from each of the MBSCs. Responsive to successful creation of the security service at a BMSC, the BMSC may transmit a response message to the BPS (e.g., at operations 5-3, 5-6, 5-9, and 5-12) to confirm/acknowledge successful creation of the security service. Accordingly, a response message may be received through provisioning interface 905 at processor circuit 903 after each create security service message, and each response message may include the key domain identification and the service key identification.

Once the security service has been created at each of the BMSCs, a same traffic key for the security service may be provided at each of the BMSCs as discussed above with respect to Figure 6. More particularly, processor circuit 903 may provide (e.g., transmit) respective traffic key identification messages (MTK_Identification messages) through provisioning interface 905 to each of the BMSCs (e.g., at operations 6-1, 6-3, 6-5, and 6-7). More particularly, each traffic key identification may include the delivery session identification, the service identification, the encryption indication, the key domain identification, the service key identification, the traffic key identification, and the refresh time associated with the traffic key identification. According to some embodiments, the traffic key may be generated/created at each BMSC as a function of the information provided in the traffic key identification message. According to some other embodiments, the traffic key is generated/created at the broadcast provisioning system BPS and provided to the BMSCs with the respective traffic key identification messages. According to either embodiment each of the plurality of BMSCs uses the same service key and traffic key to provide the MBMS service through different networks.

As discussed above with respect to Figure 5, the initial BMSC (e.g., BMSC1) may generate/create a service key MSK, a service key identification MSK-ID, and a key domain identification key_Domain_ID for the security service supporting an MBMS service, and the broadcast provisioning system BPS may propagate the service key, the service key identification, and key domain identification to other BMSCs to provide the security service supporting the same MBMS service. According to some embodiments, the security service for the MBMS service may be updated as discussed above with respect to Figure 10.

For example, processor circuit 903 may provide (e.g.,. transmit) a first update delivery session message through the provisioning interface to the first broadcast multicast service center (BMSC1) at operation 10-1, with the first update delivery session message including the delivery session identification, the service identification, the encryption indication, and an update service indication. BMSC1 may update the security service to include the original key domain identification key_Domain_ID, a second service key identification MSK-ID-2 (e.g., a second MBMS service key identification), and a second service key MSK-2 (e.g., a second MBMS service key) at operation 10-2, and transmit a response including the key domain identification, the second service key identification MSK-ID-2, and the second service key MSK-2 at operation 10-3. Accordingly, processor circuit 903 may receive the second service key MSK-2, the second service key identification MSK-ID-2, and the original key Domain identification from the first broadcast multicast service center BMSC1 through the provisioning interface 905 at operation 10-3. Upon receipt of the response through provisioning interface 905 at operation 10-3, processor circuit 903 may propagate the updated security service information to the one or more other BMSCs supporting the same MBMS.

For example, processor circuit 903 may provide (e.g., transmit) update delivery session messages through the provisioning interface to each of the secondary broadcast multicast service centers (e.g.,. BMSC2, BMSC3, and BMSC4) at operations 10-4, 10-7, and 10-10. Each update delivery session message to a secondary BMSC may include the delivery session identification, the service identification, the encryption indication, a duplicate indication, the key domain identification, the second service key identification MSK-ID-2, and the second service key MSK-2. More particularly, each update delivery session message to a secondary BMSC may include the second service key identification MSK-ID2 and the second service key MSK-2 generated/created by the primary BMSC. The BMSCs may then update the security service at operations 10-5, 10-8, and 10-11, and transmit respective responses at operations 10-6, 10-9, and 10-12.

As discussed above, a service key identification may include two parts, a key_group part and a key_number part. Once a security service has been created as discussed above with respect to Figure 5, the key_group part of the service key identification may remain unchanged during updates of Figure 10, but the key_number part of the service key identification may change each time the security service is updated.

Each broadcast multicast service center BMSC may include a provisioning interface 911 providing communications with the broadcast provisioning system (BPS), and a processor circuit 913 coupled to the provisioning interface 911. When the BMSC is selected as the primary BMSC (e.g., BMSC1), the processor circuit 913 may be configured to receive the initial create delivery session message (createDeliverySession) from the broadcast provisioning system BPS through the provisioning interface 911 at operation 5-1. As discussed above, the initial create delivery session message may include the delivery session identification, the service identification, the encryption indication, and the new service indication.

At operation 5-2, processor circuit 913 may be configured to create the security service including the key domain identification key_Domain_ID, the service key identification MSK-ID, and the service key MSK responsive to receiving the initial create delivery session message. At operation 5-3, processor circuit 913 may provide (e.g., transmit) a response message including the service key identification, the key domain identification, and the service key for the security service through the provisioning interface 911 to the broadcast provisioning system BPS.

When the BMSC is a secondary BMSC (e.g., BMSC2, BMSC3, or BMSC 4), the processor circuit 913 may be configured to receive the secondary create delivery session message (createDeliverySession) from the broadcast provisioning system BPS through the provisioning interface 911 at operation 5-4, 5-7, or 5-10. As discussed above, the secondary create delivery session message may include the delivery session identification, the service identification, the encryption indication, the duplicate indication, the key domain identification, the service key identification, and the service key.

At operation 5-5, 5-8, or 5-11, processor circuit 913 may be configured to create the security service including the key domain identification key_Domain_ID, the service key identification MSK-ID, and the service key MSK responsive to receiving the secondary create delivery session message. At operation 5-6, 5-9, or 5-12, processor circuit 913 may provide (e.g., transmit) a response message including the service key identification and the key domain identification for the security service through the provisioning interface 911 to the broadcast provisioning system BPS. As discussed above, the response of operations 5-6, 5-9, and 5-12 may also include the service key.

Once primary and secondary BMSCs have created the security service including the service key, the key domain identification, and the service key identification, the broadcast provisioning system BPS may provide the traffic key identification and the refresh time, and according to some embodiments, the BPS may provide the traffic key at operations 6-1, 6-3, 6-5, and 6-7. Accordingly, each BMSC may receive a traffic key identification message (MTK_Identification message) from the broadcast provisioning system BPS (e.g., at operation 6-1, 6-3, 6-5, or 6-7), with the traffic key identification message including the delivery session identification, the service identification, the encryption indication, the service key identification, the key domain identification, a traffic key identification, and a refresh time associated with the traffic key identification. According to some embodiments, each BMSC may generate/create a same traffic key using the service key identification, the key domain identification, and the traffic key identification.

Once each BMSC has generated/received a service key, a key domain identification, a service key identification, traffic key, and a traffic key identification, the security service may be updated as discussed above with respect to Figure 10. Processor circuit 913 of primary BMSC (e.g., BMSC1) may receive an initial update delivery session message from the BPS through provisioning interface 911 with the initial update delivery session message including the delivery session identification, the service identification, the encryption indication, and an update service indication at operation 10-1. Responsive to receiving the update delivery session message, processor circuit 913 may update the security service to use the key domain identification, a second service key identification, and a second service key at operation 10-2, with the first and second service key identifications being different and the first and second service keys being different. Processor circuit 913 of the primary BMSC may provide (e.g., transmit) a response message including the key domain identification, the second service key identification, and the second service key for the security service through provisioning interface 911 to the BPS at operation 10-3.

Processor circuit 913 of a secondary BMSC (e.g., BMSC2, BMSC3, or BMSC4) may receive a secondary update delivery session message from the BPS through provisioning interface 911 with the secondary update delivery session message including the delivery session identification, the service identification, the encryption indication, a duplicate indication, the key domain identification, the second service key identification, and the second service key at operation 10-4, 10-7, or 10-10. Responsive to receiving the update delivery session message, processor circuit 913 may update the security service to use the key domain identification, the second service key identification, and the second service key at operation 10-5, 10-8, or 10-11, with the first and second service key identifications being different and the first and second service keys being different. Processor circuit 913 of a secondary BMSC may provide (e.g., transmit) a response message including the key domain identification, and the second service key identification for the security service through provisioning interface 911 to the BPS at operation 10-6, 10-9, or 10-12.

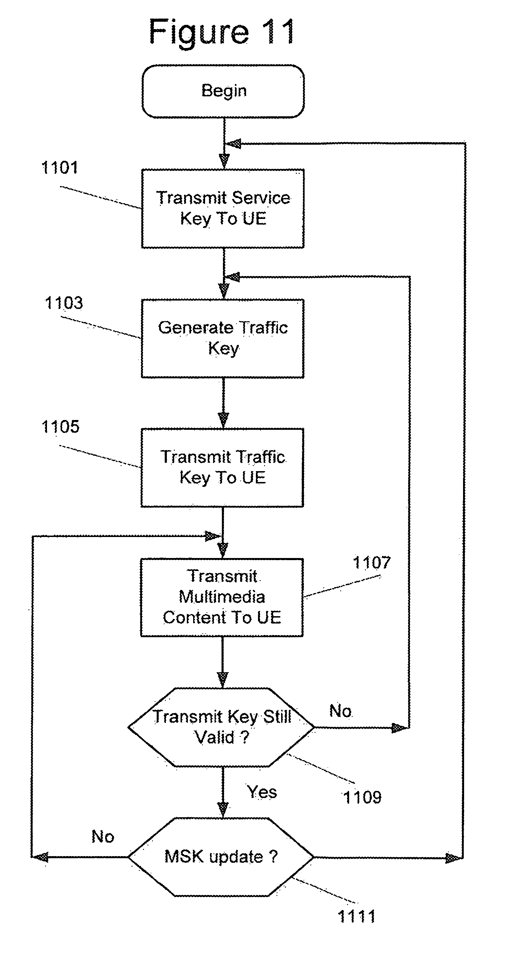

A BMSC (either a primary or secondary BMSC) may thus create a security service using a service key, a service key ID, a key domain ID, a traffic key, and a traffic key ID, and the security service may be used to provide multimedia content for a MBMS service form a content service provider CSP through a radio access network to one or more wireless terminals as illustrated in Figure 11. At block 1101, processor 913 may transmit the current service key through the RAN/BS/UE interface 915 to the user equipment node. At block 1103, processor 913 may generate/receive the traffic key as discussed above with respect Figure 6, and at block 1105, processor may transmit the traffic key protected with the service key through interface 915 to user equipment node UE. At block 1107, processor 913 may transmit multimedia content data for the MBMS service (from content service provide CSP) protected with the traffic key through interface 915 to user equipment node UE. As long at the traffic key remains valid at block 1109 and there is no service key update at block 111, processor 913 may continue transmitting multimedia content data for the MBMS service protected with the traffic key through interface 915 to user equipment node UE. If the current traffic key is no longer valid at block 1109 (e.g., upon expiration of the refresh time associated with the traffic key), processor 913 may generate/receive a new traffic key (e.g., as discussed above with respect to Figure 6) at block 1103, transmit the new traffic key through interface 915 to the user equipment node UE protected with the service key at block 1105, and transmit multimedia content data for the MBMS service through interface 915 protected with the new traffic key at block 1107. If the service key is updated as discussed above with respect to Figure 10 at block 1111, processor 913 may transmit the new service key through interface 915 to the user equipment node UE at block 1101, generate a new traffic key based on the new service key at discussed above with respect to Figure 6 at block 1103, transmit the new traffic key through interface 915 to the user equipment node UE at block 1105 protected with the new service key, and transmit multimedia content data for the MBMS service through interface 915 through interface 915 protected with the new traffic key to the user equipment node at block 1107.

As discussed above with respect to Figures 5, 6, and 10, provisioning functionality may be provided by a broadcast provisioning system BPS separate from the Broadcast Multicast Service Centers according to some embodiments illustrated in Figure 3. According to other embodiments illustrated in Figure 4, provisioning functionality may be provided by a master provisioning BMSC. For example, BMSC1 of Figures 5, 6, and 10 may be a master provisioning BMSC incorporating functionality of the broadcast provisioning system BPS.

### Acronyms:

- BMSC (or BM-SC): - Broadcast Multicast Service Center
- LTE: - Long Term Evolution
- MBMS: - Multimedia Broadcast/Multicast Service
- MCCH: - MBMS Control Channel
- MSK: - MBMS Transport Keys
- MTK: - MBMS Service Keys
- 3GPP: - 3rd Generation Partnership Project
- UTC: - Universal Time Coordinated

In the above-description of various embodiments of present inventive concepts, it is to be understood that the terminology used herein is for the purpose of describing particular embodiments only and is not intended to be limiting of inventive concepts. Unless otherwise defined, all terms (including technical and scientific terms) used herein have the same meaning as commonly understood by one of ordinary skill in the art to which inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

Many variations and modifications can be made to the embodiments without substantially departing from the principles of present inventive concepts. All such variations and modifications are intended to be included herein within the scope of present inventive concepts. Accordingly, the above disclosed subject matter is to be considered illustrative, and not restrictive, and the appended claims are intended to cover all such modifications, enhancements, and other embodiments, which fall within the spirit and scope of present inventive concepts. Thus, to the maximum extent allowed by law, the scope of present inventive concepts is to be determined by the broadest permissible interpretation of the following claims and their equivalents, and shall not be restricted or limited by the foregoing detailed description.

## Claims

1. A method of creating a delivery session for multiple broadcast multicast service centers, the method comprising:
providing (5-1) a first create delivery session message for a first broadcast multicast service center (BMSC1);
receiving (5-3) a service key identification and a key domain identification from the first broadcast multicast service center (BMSC1); and
providing (5-4) a second create delivery session message for a second broadcast multicast service center (BMSC2), wherein the second create delivery session message includes the service key identification and the key domain identification from the first broadcast multicast service center (BMSC1) and wherein the second create delivery session message includes a duplicate indication.

2. The method of Claim 1 wherein providing the second create delivery session message comprises providing the second create delivery session message for the second broadcast multicast service center (BMSC2) responsive to receiving the service key identification and the key Domain identification from the first broadcast multicast service center (BMSC1).

3. The method of any of Claims 1-2 wherein the first broadcast multicast service center (BMSC1) is remote from the second broadcast multicast service center (BMSC2).

4. The method of Claim 3 wherein providing the first create delivery session message comprises transmitting the first create delivery session message from a broadcast provisioning system (BPS) to the first broadcast multicast service center (BMSC1) remote from the broadcast provisioning system (BPS).

5. The method of any of Claims 3-4 wherein providing the second create delivery session message comprises transmitting the second create delivery session message from a broadcast provisioning system (BPS) to the second broadcast multicast service center (BMSC2) remote from the broadcast provisioning system (BPS).

6. The method of any of Claims 1-5 further comprising:
providing (5-7) a third create delivery session message for a third broadcast multicast service center (BMSC3), wherein the third create delivery session message includes a duplicate indication and wherein the third create deliver session message includes the service key identification and the key domain identification from the first broadcast multicast service center (BMSC1), and wherein the third broadcast multicast service center (BMSC3) is remote from the first and second broadcast multicast service centers (BMSC1 and BMSC2).

7. The method of any of Claims 1-6 wherein the first create delivery session message includes a new service indication, and wherein the second create delivery session message includes a duplicate indication.

8. The method of any of Claims 1-7 further comprising:
receiving (5-6) the service key identification and the key Domain identification from the second broadcast multicast service center.

9. The method of any of Claims 1-8 wherein the service key identification comprises a Multimedia-Broadcast/Multicast-Service, MBMS, service key identification (MSK-ID).

10. The method of any of Claims 1-9 further comprising:
providing (6-1) a first traffic key identification message to the first broadcast multicast service center (BMSC1), wherein the first traffic key identification message includes the service key identification, the key domain identification, a traffic key identification, and a refresh time associated with the traffic key identification; and
providing (6-3) a second traffic key identification message to the second broadcast multicast service center (BMSC2), wherein the second traffic key identification message includes the service key identification, the key domain identification, the traffic key identification, and the refresh time associated with the traffic key identification.

11. The method of Claim 10 wherein the first create delivery session message includes a delivery session identification and a service identification, wherein the second create delivery session message includes the delivery session identification and the service identification, wherein the first traffic key identification message includes the delivery session identification and the service identification, and wherein the second traffic key identification message includes the delivery session identification and the service identification.

12. The method of any of Claims 1-11 wherein the service key identification is a first service key identification, wherein the first create delivery session message includes a delivery session identification and a service identification, and wherein the second create delivery session message includes the delivery session identification and the service identification, the method further comprising:
providing (10-1) a first update delivery session message for the first broadcast multicast service center (BMSC1), wherein the first update delivery session message includes the delivery session identification and the service identification;
receiving (10-3) the key domain identification and a second service key identification from the first broadcast multicast service center (BMSC1), wherein the first and second service key identifications are different; and
providing (10-4) a second update delivery session message for a second broadcast multicast service center (BMSC2), wherein the second create delivery session message includes the second service key identification and the key domain identification from the first broadcast multicast service center (BMSC1).

13. The method of any of Claims 1-12 wherein receiving the service key identification and the key domain identification further comprises receiving (5-3) the service key identification, the key domain identification, and a service key from the first broadcast multicast service center (BMSC1), and wherein the second create delivery session message further includes the service key from the first broadcast multicast service center.

14. A broadcast provisioning system comprising:
a provisioning interface (905) providing communications with first and second broadcast multicast service centers (BMSC1 and BMSC2); and
a processor circuit (903) coupled to the provisioning interface (905), wherein the processor circuit (903) is configured to,
provide (5-1) a first create delivery session message for the first broadcast multicast service center (BMSC1) through the provisioning interface (905), wherein the first create delivery session message includes a new service indication,
receive (5-3) a service key identification and a key Domain identification from the first broadcast multicast service center (BMSC1) through the provisioning interface (905), and
provide (5-4) a second create delivery session message for the second broadcast multicast service center (BMSC2) through the provisioning interface (905), wherein the second create delivery session message includes the service key identification and the key domain identification from the first broadcast multicast service center (BMSC1).

15. A method of providing a broadcast service at a broadcast multicast service center (BMSC), the method comprising:
receiving (5-1, 5-4) a create delivery session message from a broadcast provisioning system (BPS);
responsive to receiving the create delivery session message, creating (5-2, 5-5) a security service at the broadcast multicast service center including a key domain identification and a service key identification; and
providing (5-3, 5-6) the service key identification and the key domain identification for the security service to the broadcast provisioning system.

16. The method of Claim 15 wherein receiving the create delivery session message comprises receiving (5-1) the create delivery session message including a new service indication, wherein creating the security service comprises creating (5-2) the key domain identification and the service key identification at the broadcast multicast service center.

17. The method of Claim 15 wherein receiving the create delivery session message comprises receiving (5-4) the create delivery session message including a duplicate indication and including the key domain indication and the service key identification, and wherein creating the security service comprises creating (5-5) the security service using the key domain identification and the service key identification received from the broadcast provisioning system.

18. The method of any of Claims 15-17 further comprising:
receiving (6-1, 6-3) a traffic key identification message from the broadcast provisioning system (BPS), wherein the traffic key identification message includes the service key identification, the key domain identification, a traffic key identification, and a refresh time associated with the traffic key identification.

19. The method of Claim 18 wherein the create delivery session message includes a delivery session identification and a service identification, and wherein the traffic key identification message includes the delivery session identification and the service identification.

20. The method of Claim 19 further comprising:
generating (1003) a traffic key at the broadcast multicast service center using the service key identification, the key domain identification, and the traffic key identification.

21. The method of Claim 20 wherein the traffic key comprises a Multimedia-Broadcast/Multicast-Service, MBMS, traffic key (MTK), wherein the service key identification comprises an MBMS service key identification (MSK-ID), and wherein the traffic key identification comprises an MBMS traffic key identification (MTK-ID).

22. The method of any of Claims 20-21 wherein creating further comprises creating a service key identified by the key domain identification and the service key identification, the method further comprising:
transmitting (1001) the service key to a user equipment node;
transmitting (1005) the traffic key to the user equipment node protected with the service key; and
transmitting (1007) multimedia content data to the user equipment node protected with the traffic key.

23. The method of any of Claims 15-22 wherein the service key identification is a first service key identification, and wherein the create delivery session message includes a delivery session identification and a service identification, the method further comprising:
receiving (10-1) an update delivery session message from the broadcast provisioning system (BPS), wherein the first update delivery session message includes the delivery session identification and the service identification;
responsive to receiving the update delivery session message, updating (10-2, 10-5) the security service at the broadcast multicast service center to use the key domain identification and a second service key identification, wherein the first and second service key identifications are different; and
providing (10-3, 10-6) the key domain identification and the second service key identification for the security service to the broadcast provisioning system.

24. The method of any of Claims 15-23 wherein creating the security service comprises creating security service including the service key identification, the key domain identification, and a service key, and wherein providing the service key identification and the key domain identification further comprises providing the service key identification, the key domain identification, and the service key to the broadcast provisioning system.

25. A broadcast multicast service center (BMSC) comprising:
a provisioning interface (911) providing communications with a broadcast provisioning system (BPS); and
a processor circuit (913) coupled to the provisioning interface (911), wherein the processor circuit (913) is configured to,
receive a create delivery session message from the broadcast provisioning system (BPS) through the provisioning interface (911),
create a security service including a key domain identification and a service key identification responsive to receiving the create delivery session message, and
provide the service key identification and the key domain identification for the security service through the provisioning interface (911) to the broadcast provisioning system.

## Patentansprüche

1. Verfahren zum Erzeugen einer Lieferungssitzung für Multiple Broadcast Multicast Servicezentren, wobei das Verfahren Folgendes umfasst:
Bereitstellen (5-1) einer ersten Nachricht zum Erzeugen einer Lieferungssitzung für ein erstes Broadcast Multicast Service Center (BMSC1);
Empfangen (5-3) einer Service-Key-Kennung und einer Key-Domänenkennung von dem ersten Broadcast Multicast Service Center (BMSC1); und
Bereitstellen (5-4) einer zweiten Nachricht zum Erzeugen einer Lieferungssitzung für ein zweites Broadcast Multicast Service Center (BMSC2), wobei die zweite Nachricht zum Erzeugen einer Lieferungssitzung die Service-Key-Kennung und die Key-Domänenkennung von dem ersten Broadcast Multicast Service Center (BMSC1) umfasst und wobei die zweite Nachricht zum Erzeugen einer Lieferungssitzung eine Duplikatangabe umfasst.

2. Verfahren nach Anspruch 1, wobei das Bereitstellen der zweiten Nachricht zum Erzeugen einer Lieferungssitzung das Bereitstellen der zweiten Nachricht zum Erzeugen einer Lieferungssitzung für das zweite Broadcast Multicast Service Center (BMSC2) als Reaktion auf das Empfangen der Service-Key-Kennung und der Key-Domänenkennung von dem ersten Broadcast Multicast Service Center (BMSC1) umfasst.

3. Verfahren nach einem der Ansprüche 1-2, wobei das erste Broadcast Multicast Service Center (BMSC1) von dem zweiten Broadcast Multicast Service Center (BMSC2) entfernt ist.

4. Verfahren nach Anspruch 3, wobei das Bereitstellen der ersten Nachricht zum Erzeugen einer Lieferungssitzung das Übertragen der ersten Nachricht zum Erzeugen einer Lieferungssitzung von einem Broadcast-Bereitstellungssystem (BPS) an das erste Broadcast Multicast Service Center (BMSC1) umfasst, das von dem Broadcast-Bereitstellungssystem (BPS) entfernt ist.

5. Verfahren nach einem der Ansprüche 3-4, wobei das Bereitstellen der zweiten Nachricht zum Erzeugen einer Lieferungssitzung das Übertragen der zweiten Nachricht zum Erzeugen einer Lieferungssitzung von einem Broadcast-Bereitstellungssystem (BPS) an das zweite Broadcast Multicast Service Center (BMSC2) umfasst, das von dem Broadcast-Bereitstellungssystem (BPS) entfernt ist.

6. Verfahren nach einem der Ansprüche 1-5, ferner umfassend:
Bereitstellen (5-7) einer dritten Nachricht zum Erzeugen einer Lieferungssitzung für ein drittes Broadcast Multicast Service Center (BMSC3), wobei die dritte Nachricht zum Erzeugen einer Lieferungssitzung eine Duplikatangabe umfasst und wobei die dritte Nachricht zum Erzeugen einer Lieferungssitzung die Service-Key-Kennung und die Key-Domänenkennung von dem ersten Broadcast Multicast Service Center (BMSC1) umfasst und wobei das dritte Broadcast Multicast Service Center (BMSC3) von den ersten und zweiten Broadcast Multicast Service Centern (BMSC1 und BMSC2) entfernt ist.

7. Verfahren nach einem der Ansprüche 1-6, wobei die erste Nachricht zum Erzeugen einer Lieferungssitzung eine neue Dienstangabe umfasst und wobei die zweite Nachricht zum Erzeugen einer Lieferungssitzung eine Duplikatangabe umfasst.

8. Verfahren nach einem der Ansprüche 1-7, ferner umfassend:
Empfangen (5-6) der Service-Key-Kennung und der Key-Domänenkennung von dem zweiten Broadcast Multicast Service Center.

9. Verfahren nach einem der Ansprüche 1-8, wobei die Service-Key-Kennung eine Multimedia-Broadcast/Multicast-Service-, MBMS-, Service-Key-Kennung (MSK-ID) umfasst.

10. Verfahren nach einem der Ansprüche 1-9, ferner umfassend:
Bereitstellen (6-1) einer ersten Traffic-Key-Kennungsnachricht für das erste Broadcast Multicast Service Center (BMSC1), wobei die erste Traffic-Key-KennungTraffic-Key-Kennungsnachricht die Service-Key-Kennung , die Key-Domänenkennung, eine Traffic-Key-Kennung und eine Aktualisierungszeit umfasst, die mit der Traffic-Key-Kennung verknüpft ist; und
Bereitstellen (6-3) einer zweiten Traffic-Key-Kennungsnachricht für das zweite Broadcast Multicast Service Center (BMSC2), wobei die zweite Traffic-Key-Kennungsnachricht die Service-Key-Kennung, die Key-Domänenkennung, die Traffic-Key-Kennung und das Aktualisierungsintervall umfasst, das mit der Traffic-Key-Kennung verknüpft ist.

11. Verfahren nach Anspruch 10, wobei die erste Nachricht zum Erzeugen einer Lieferungssitzung eine Lieferungssitzungskennung und eine Service-Kennung umfasst, wobei die zweite Nachricht zum Erzeugen einer Lieferungssitzung die Lieferungssitzungskennung und die Service-Kennung umfasst, wobei die erste Traffic-Key-Kennungsnachricht die Lieferungssitzungskennung und die Service-Kennung umfasst und wobei die zweite Traffic-Key-Kennungsnachricht die Lieferungssitzungskennung und die Service-Kennung umfasst.

12. Verfahren nach einem der Ansprüche 1-11, wobei die Service-Key-Kennung eine erste Service-Key-Kennung ist, wobei die erste Nachricht zum Erzeugen einer Lieferungssitzung eine Lieferungssitzungskennung und eine Service-Kennung umfasst und wobei die zweite Nachricht zum Erzeugen einer Lieferungssitzung die Lieferungssitzungskennung und die Service-Kennung umfasst, wobei das Verfahren ferner Folgendes umfasst:
Bereitstellen (10-1) einer ersten Nachricht zum Aktualisieren der Lieferungssitzung für das erste Broadcast Multicast Service Center (BMSC1), wobei die erste Nachricht zum Aktualisieren der Lieferungssitzung die Lieferungssitzungskennung und die Service-Kennung umfasst;
Empfangen (10-3) der Key-Domänenkennung und einer zweiten Service-Key-Kennung von dem ersten Broadcast Multicast Service Center (BMSC1), wobei sich die ersten und zweiten Service-Key-Kennung en unterscheiden; und
Bereitstellen (10-4) einer zweiten Nachricht zum Aktualisieren der Lieferungssitzung für ein zweites Broadcast Multicast Service Center (BMSC2), wobei die zweite Nachricht zum Erzeugen einer Lieferungssitzung die zweite Service-Key-Kennung und die Key-Domänenkennung von dem ersten Broadcast Multicast Service Center (BMSC1) umfasst.

13. Verfahren nach einem der Ansprüche 1-12, wobei das Empfangen der Service-Key-Kennung und der Key-Domänenkennung ferner das Empfangen (5-3) der Service-Key-Kennung, der Key-Domänenkennung und eines Service-KeyService-Keys von dem ersten Broadcast Multicast Service Center (BMSC1) umfasst und wobei die zweite Nachricht zum Erzeugen einer Lieferungssitzung ferner den Service-Key von dem ersten Broadcast Multicast Service Center umfasst.

14. Broadcast-Bereitstellungssystem, umfassend:
eine Provisioning-Schnittstelle (905), die Kommunikationen mit ersten und zweiten Broadcast Multicast Service Centern (BMSC1 und BMSC2) vorsieht; und
eine Prozessorschaltung (903), die mit der Provisioning-Schnittstelle (905) gekoppelt ist, wobei die Prozessorschaltung (903) konfiguriert ist zum
Bereitstellen (5-1) einer ersten Nachricht zum Erzeugen einer Lieferungssitzung für das erste Broadcast Multicast Service Center (BMSC1) durch die Provisioning-Schnittstelle (905), wobei die erste Nachricht zum Erzeugen einer Lieferungssitzung eine neue Dienstangabe umfasst,
Empfangen (5-3) einer Service-Key-Kennung und einer Key-Domänenkennung von dem ersten Broadcast Multicast Service Center (BMSC1) über die Provisioning-Schnittstelle (905) und
Bereitstellen (5-4) einer zweiten Nachricht zum Erzeugen einer Lieferungssitzung für das zweite Broadcast Multicast Service Center (BMSC2) über die Provisioning-Schnittstelle (905), wobei die zweite Nachricht zum Erzeugen einer Lieferungssitzung die Service-Key-Kennung und die Key-Domänenkennung von dem ersten Broadcast Multicast Service Center (BMSC1) umfasst.

15. Verfahren zur Bereitstellung eines Broadcast Services an einem Broadcast Multicast Service Center (BMSC), wobei das Verfahren Folgendes umfasst:
Empfangen (5-1, 5-4) einer Nachricht zum Erzeugen einer Lieferungssitzung von einem Broadcast-Bereitstellungssystem (BPS) ;
als Reaktion auf das Empfangen der Nachricht zum Erzeugen einer Lieferungssitzung, Erzeugen (5-2, 5-5) eines Sicherheitsdiensts an dem Broadcast Multicast Service Center, umfassend eine Key-Domänenkennung und eine Service-Key-Kennung; und
Bereitstellen (5-3, 5-6) der Service-Key-Kennung und der Key-Domänenkennung für den Sicherheitsdienst an das Broadcast-Bereitstellungssystem.

16. Verfahren nach Anspruch 15, wobei das Empfangen der Nachricht zum Erzeugen einer Lieferungssitzung das Empfangen (5-1) der Nachricht zum Erzeugen einer Lieferungssitzung, umfassend eine neue Dienstangabe, umfasst, wobei das Erzeugen des Sicherheitsdienstes das Erzeugen (5-2) der Key-Domänenkennung und der Service-Key-Kennung an dem Broadcast Multicast Service Center umfasst.

17. Verfahren nach Anspruch 15, wobei das Empfangen der Nachricht zum Erzeugen einer Lieferungssitzung das Empfangen (5-4) der Nachricht zum Erzeugen einer Lieferungssitzung, umfassend eine Duplikatangabe und umfassend die Key-Domänenkennung und die Service-Key-Kennung umfasst und wobei das Erzeugen des Sicherheitsdiensts das Erzeugen (5-5) des Sicherheitsdiensts unter Verwendung der von dem Broadcast-Bereitstellungssystem empfangenen Key-Domänenkennung und der Service-Key-Kennung umfasst.

18. Verfahren nach einem der Ansprüche 15-17, ferner umfassend:
Empfangen (6-1, 6-3) einer Traffic-Key-Kennungsnachricht von dem Broadcast-Bereitstellungssystem (BPS), wobei die Traffic-Key-Kennungsnachricht die Service-Key-Kennung, die Key-Domänenkennung, eine Traffic-Key-Kennung und eine Aktualisierungszeitumfasst, die mit der Traffic-Key-Kennung verknüpft ist.

19. Verfahren nach Anspruch 18, wobei die Nachricht zum Erzeugen einer Lieferungssitzung eine Lieferungssitzungskennung und eine Service-Kennung umfasst und wobei die Traffic-Key-Kennungsnachricht die Lieferungssitzungskennung und die Service-Kennung umfasst.

20. Verfahren nach Anspruch 19, ferner umfassend:
Generieren (1003) eines Traffic-KeyTraffic-Keys an dem Broadcast Multicast Service Center unter Verwendung der Service-Key-Kennung, der Key-Domänenkennung und der Traffic-Key-Kennung.

21. Verfahren nach Anspruch 20, wobei der Traffic-Key einen Multimedia-Broadcast/Multicast-Service-, MBMS-, Traffic-Key (MTK) umfasst, wobei die Service-Key-Kennung eine MBMS-Service-Key-Kennung (MSK-ID) umfasst und wobei die Traffic-Key-Kennung eine MBMS-Traffic-Key-Kennung (MTK-ID) umfasst.

22. Verfahren nach einem der Ansprüche 20-21, wobei das Erzeugen fernerhin das Erzeugen eines Service-Keys umfasst, der durch die Key-Domänenkennung und die Service-Key-Kennung identifiziert wird, wobei das Verfahren ferner Folgendes umfasst:
Übertragen (1001) des Service-Keys an einen Endgerätknoten;
Übertragen (1005) des Traffic-Keys an den Endgerätknoten, den der Service-Key schützt; und
Übertragen (1007) von Multimediainhalten an den Endgerätknoten, den der Traffic-Key schützt.

23. Verfahren nach einem der Ansprüche 15-22, wobei die Service-Key-Kennung eine erste Service-Key-Kennung darstellt, und wobei die Nachricht zum Erzeugen einer Lieferungssitzung eine Lieferungssitzungskennung und eine Service-Kennung umfasst, wobei das Verfahren ferner Folgendes umfasst:
Empfangen (10-1) einer Nachricht zum Aktualisieren der Lieferungssitzung von dem Broadcast-Bereitstellungssystem (BPS), wobei die erste Nachricht zum Aktualisieren der Lieferungssitzung die Lieferungssitzungskennung und die Service-Kennung umfasst;
als Reaktion auf das Empfangen der Nachricht zum Aktualisieren der Lieferungssitzung, Aktualisieren (10-2, 10-5) des Sicherheitsdiensts an dem Broadcast Multicast Service Center, um die Key-Domänenkennung und eine zweite Service-Key-Kennung zu verwenden, wobei sich die ersten und zweiten Service-Key-Kennungen unterscheiden; und
Bereitstellen (10-3, 10-6) der Key-Domänenkennung und der zweiten Service-Key-Kennung für den Sicherheitsdienst an das Broadcast-Bereitstellungssystem.

24. Verfahren nach einem der Ansprüche 15-23, wobei das Erzeugen des Sicherheitsdiensts das Erzeugen des Sicherheitsdiensts, umfassend die Service-Key-Kennung, die Key-Domänenkennung und einen Service-Key umfasst , und wobei das Bereitstellen der Service-Key-Kennung und der Key-Domänenkennung fernerhin das Bereitstellen der Service-Key-Kennung , der Key-Domänenkennung und des Service-Keys an das Broadcast-Bereitstellungssystem umfasst.

25. Broadcast Multicast Service Center (BMSC), umfassend:
eine Provisioning-Schnittstelle (911), die Kommunikationen mit einem Broadcast-Bereitstellungssystem (BPS) vorsieht; und
eine Prozessorschaltung (913), die an die Provisioning-Schnittstelle (911) gekoppelt ist, wobei die Prozessorschaltung (913) konfiguriert ist, um
eine Nachricht zum Erzeugen einer Lieferungssitzung von dem Broadcast-Bereitstellungssystem (BPS) durch die Provisioning-Schnittstelle (911) zu empfangen,
einen Sicherheitsdienst, umfassend eine Key-Domänenkennung und eine Service-Key-Kennung als Reaktion auf das Empfangen der Nachricht zum Erzeugen einer Lieferungssitzung zu erzeugen und
die Service-Key-Kennung und die Key-Domänenkennung für den Sicherheitsdienst durch die Provisioning-Schnittstelle (911) an das Broadcast-Bereitstellungssystem bereitzustellen.

## Revendications

1. Procédé de création d'une session de livraison pour de multiples centres de service de diffusion-multidiffusion, le procédé comprenant :
la fourniture (5-1) d'un premier message de création de session de livraison pour un premier centre de service de diffusion-multidiffusion (BMSC1) ;
la réception (5-3) d'une identification de clef de service et d'une identification de domaine de clef à partir du premier centre de service de diffusion-multidiffusion (BMSC1) ; et
la fourniture (5-4) d'un deuxième message de création de session de livraison pour un deuxième centre de service de diffusion-multidiffusion (BMSC2), dans lequel le deuxième message de création de session de livraison comprend l'identification de clef de service et
l'identification de domaine de clef à partir du premier centre de service de diffusion-multidiffusion (BMSC1) et dans lequel le deuxième message de création de session de livraison comprend une indication dupliquée.

2. Procédé selon la revendication 1, dans lequel la fourniture du deuxième message de création de session de livraison comprend la fourniture du deuxième message de création de session de livraison pour le deuxième centre de service de diffusion-multidiffusion (BMSC2) en réponse à la réception de l'identification de clef de service et de l'identification de domaine de clef à partir du premier centre de service de diffusion-multidiffusion (BMSC1).

3. Procédé selon l'une quelconque des revendications 1 et 2, dans lequel le premier centre de service de diffusion-multidiffusion (BMSC1) est éloigné du deuxième centre de service de diffusion-multidiffusion (BMSC2).

4. Procédé selon la revendication 3, dans lequel la fourniture du premier message de création de session de livraison comprend la transmission du premier message de création de session de livraison d'un système de mise à disposition de diffusion (BPS) au premier centre de service de diffusion-multidiffusion (BMSC1) éloigné du système de mise à disposition de diffusion (BPS).

5. Procédé selon l'une quelconque des revendications 3 et 4, dans lequel la fourniture du deuxième message de création de session de livraison comprend la transmission du deuxième message de création de session de livraison d'un système de mise à disposition de diffusion (BPS) au deuxième centre de service de diffusion-multidiffusion (BMSC2) éloigné du système de mise à disposition de diffusion (BPS).

6. Procédé selon l'une quelconque des revendications 1 à 5, comprenant en outre :
la fourniture (5-7) d'un troisième message de création de session de livraison pour un troisième centre de service de diffusion-multidiffusion (BMSC3), dans lequel le troisième message de création de session de livraison comprend une indication dupliquée et dans lequel le troisième message de création de session de livraison comprend l'identification de clef de service et l'identification de domaine de clef à partir du premier centre de service de diffusion-multidiffusion (BMSC1), et dans lequel le troisième centre de service de diffusion-multidiffusion (BMSC3) est éloigné des premier et deuxième centres de service de diffusion-multidiffusion (BMSC1 et BMSC2).

7. Procédé selon l'une quelconque des revendications 1 à 6, dans lequel le premier message de création de session de livraison comprend une nouvelle indication de service, et dans lequel le deuxième message de création de session de livraison comprend une indication dupliquée.

8. Procédé selon l'une quelconque des revendications 1 à 7, comprenant en outre :
la réception (5-6) de l'identification de clef de service et de l'identification de domaine de clef à partir du deuxième centre de service de diffusion-multidiffusion.

9. Procédé selon l'une quelconque des revendications 1 à 8, dans lequel l'identification de clef de service comprend une identification de clef de service de service de diffusion/multidiffusion multimédia, MBMS, (MSK-ID) .

10. Procédé selon l'une quelconque des revendications 1 à 9, comprenant en outre :
la fourniture (6-1) d'un premier message d'identification de clef de trafic au premier centre de service de diffusion-multidiffusion (BMSC1), dans lequel le premier message d'identification de clef de trafic comprend l'identification de clef de service, l'identification de domaine de clef, une identification de clef de trafic, et un temps de rafraîchissement associé à l'identification de clef de trafic ; et
la fourniture (6-3) d'un second message d'identification de clef de trafic au deuxième centre de service de diffusion-multidiffusion (BMSC2), dans lequel le second message d'identification de clef de trafic comprend l'identification de clef de service, l'identification de domaine de clef, l'identification de clef de trafic, et le temps de rafraîchissement associé à l'identification de clef de trafic.

11. Procédé selon la revendication 10, dans lequel le premier message de création de session de livraison comprend une identification de session de livraison et une identification de service, dans lequel le deuxième message de création de session de livraison comprend l'identification de session de livraison et l'identification de service, dans lequel le premier message d'identification de clef de trafic comprend l'identification de session de livraison et l'identification de service, et dans lequel le second message d'identification de clef de trafic comprend l'identification de session de livraison et l'identification de service.

12. Procédé selon l'une quelconque des revendications 1 à 11, dans lequel l'identification de clef de service est une première identification de clef de service, dans lequel le premier message de création de session de livraison comprend une identification de session de livraison et une identification de service, et dans lequel le deuxième message de création de session de livraison comprend l'identification de session de livraison et l'identification de service, le procédé comprenant en outre :
la fourniture (10-1) d'un premier message d'actualisation de session de livraison pour le premier centre de service de diffusion-multidiffusion (BMSC1), dans lequel le premier message d'actualisation de session de livraison comprend l'identification de session de livraison et l'identification de service ;
la réception (10-3) de l'identification de domaine de clef et d'une seconde identification de clef de service à partir du premier centre de service de diffusion-multidiffusion (BMSC1), dans lequel les première et seconde identifications de clef de service sont différentes ; et
la fourniture (10-4) d'un second message d'actualisation de session de livraison pour un deuxième centre de service de diffusion-multidiffusion (BMSC2), dans lequel le deuxième message de création de session de livraison comprend la seconde identification de clef de service et l'identification de domaine de clef à partir du premier centre de service de diffusion-multidiffusion (BMSC1).

13. Procédé selon l'une quelconque des revendications 1 à 12, dans lequel la réception de l'identification de clef de service et de l'identification de domaine de clef comprend en outre la réception (5-3) de l'identification de clef de service, de l'identification de domaine de clef, et d'une clef de service à partir du premier centre de service de diffusion-multidiffusion (BMSC1), et dans lequel le deuxième message de création de session de livraison comprend en outre la clef de service à partir du premier centre de service de diffusion-multidiffusion.

14. Système de mise à disposition de diffusion, comprenant :
une interface de mise à disposition (905) fournissant des communications avec des premier et deuxième centres de service de diffusion-multidiffusion (BMSC1 et BMSC2) ; et
un circuit processeur (903) couplé à l'interface de mise à disposition (905), dans lequel le circuit processeur (903) est configuré pour :
fournir (5-1) un premier message de création de session de livraison pour le premier centre de service de diffusion-multidiffusion (BMSC1) par l'intermédiaire de l'interface de mise à disposition (905), dans lequel le premier message de création de session de livraison comprend une nouvelle indication de service,
recevoir (5-3) une identification de clef de service et une identification de domaine de clef à partir du premier centre de service de diffusion-multidiffusion (BMSC1) par l'intermédiaire de l'interface de mise à disposition (905), et
fournir (5-4) un deuxième message de création de session de livraison pour le deuxième centre de service de diffusion-multidiffusion (BMSC2) par l'intermédiaire de l'interface de mise à disposition (905), dans lequel le deuxième message de création de session de livraison comprend l'identification de clef de service et l'identification de domaine de clef à partir du premier centre de service de diffusion-multidiffusion (BMSC1).

15. Procédé de fourniture d'un service de diffusion dans un centre de service de diffusion-multidiffusion (BMSC), le procédé comprenant :
la réception (5-1, 5-4) d'un message de création de session de livraison à partir d'un système de mise à disposition de diffusion (BPS) ;
en réponse à la réception du message de création de session de livraison, la création (5-2, 5-5) d'un service de sécurité dans le centre de service de diffusion-multidiffusion comprenant une identification de domaine de clef et une identification de clef de service ; et
la fourniture (5-3, 5-6) de l'identification de clef de service et l'identification de domaine de clef pour le service de sécurité au système de mise à disposition de diffusion.

16. Procédé selon la revendication 15, dans lequel la réception du message de création de session de livraison comprend la réception (5-1) du message de création de session de livraison comprenant une nouvelle indication de service, dans lequel la création du service de sécurité comprend la création (5-2) de l'identification de domaine de clef et de l'identification de clef de service dans le centre de service de diffusion-multidiffusion.

17. Procédé selon la revendication 15, dans lequel la réception du message de création de session de livraison comprend la réception (5-4) du message de création de session de livraison comprenant une indication dupliquée et comprenant l'identification de domaine de clef et l'identification de clef de service, et dans lequel la création du service de sécurité comprend la création (5-5) du service de sécurité en utilisant l'identification de domaine de clef et l'identification de clef de service reçues à partir du système de mise à disposition de diffusion.

18. Procédé selon l'une quelconque des revendications 15 à 17, comprenant en outre :
la réception (6-1, 6-3) d'un message d'identification de clef de trafic à partir du système de mise à disposition de diffusion (BPS), dans lequel le message d'identification de clef de trafic comprend l'identification de clef de service, l'identification de domaine de clef, une identification de clef de trafic, et un temps de rafraîchissement associé à l'identification de clef de trafic.

19. Procédé selon la revendication 18, dans lequel le message de création de session de livraison comprend une identification de session de livraison et une identification de service, et dans lequel le message d'identification de clef de trafic comprend l'identification de session de livraison et l'identification de service.

20. Procédé selon la revendication 19, comprenant en outre :
la génération (1003) d'une clef de trafic dans le centre de service de diffusion-multidiffusion en utilisant l'identification de clef de service, l'identification de domaine de clef, et l'identification de clef de trafic.

21. Procédé selon la revendication 20, dans lequel la clef de trafic comprend une clef de trafic de service de diffusion/multidiffusion multimédia, MBMS, (MTK), dans lequel l'identification de clef de service comprend une identification de clef de service MBMS (MSK-ID), et dans lequel l'identification de clef de trafic comprend une identification de clef de trafic MBMS (MTK-ID).

22. Procédé selon l'une quelconque des revendications 20 et 21, dans lequel la création comprend en outre la création d'une clef de service identifiée par l'identification de domaine de clef et l'identification de clef de service, le procédé comprenant en outre :
la transmission (1001) de la clef de service à un noeud d'équipement utilisateur ;
la transmission (1005) de la clef de trafic au noeud d'équipement utilisateur protégé avec la clef de service ; et
la transmission (1007) de données de contenu multimédia au noeud d'équipement utilisateur protégé avec la clef de trafic.

23. Procédé selon l'une quelconque des revendications 15 à 22, dans lequel l'identification de clef de service est une première identification de clef de service, et dans lequel le message de création de session de livraison comprend une identification de session de livraison et une identification de service, le procédé comprenant en outre :
la réception (10-1) d'un message d'actualisation de session de livraison à partir du système de mise à disposition de diffusion (BPS), dans lequel le premier message d'actualisation de session de livraison comprend l'identification de session de livraison et l'identification de service ;
en réponse à la réception du message d'actualisation de session de livraison, l'actualisation (10-2, 10-5) du service de sécurité dans le centre de service de diffusion-multidiffusion pour utiliser l'identification de domaine de clef et une seconde identification de clef de service, dans lequel les première et seconde identifications de clef de service sont différentes ; et
la fourniture (10-3, 10-6) de l'identification de domaine de clef et de la seconde identification de clef de service pour le service de sécurité au système de mise à disposition de diffusion.

24. Procédé selon l'une quelconque des revendications 15 à 23, dans lequel la création du service de sécurité comprend la création de service de sécurité comprenant l'identification de clef de service, l'identification de domaine de clef, et une clef de service, et dans lequel la fourniture de l'identification de clef de service et de l'identification de domaine de clef comprend en outre la fourniture de l'identification de clef de service, de l'identification de domaine de clef, et de la clef de service au système de mise à disposition de diffusion.

25. Centre de service de diffusion-multidiffusion (BMSC), comprenant :
une interface de mise à disposition (911) fournissant des communications avec un système de mise à disposition de diffusion (BPS) ; et
un circuit processeur (913) couplé à l'interface de mise à disposition (911), dans lequel le circuit processeur (913) est configuré pour :
recevoir un message de création de session de livraison à partir du système de mise à disposition de diffusion (BPS) par l'intermédiaire de l'interface de mise à disposition (911),
créer un service de sécurité comprenant une identification de domaine de clef et une identification de clef de service en réponse à la réception du message de création de session de livraison, et
fournir l'identification de clef de service et l'identification de domaine de clef pour le service de sécurité par l'intermédiaire de l'interface de mise à disposition (911) au système de mise à disposition de diffusion.
